# EUROPEAN PATENT SPECIFICATION

(11) **EP 3 143 859 B1**
(45) Date of publication and mention of the grant of the patent: **27.06.2018**
(21) Application number: 16189788.9
(22) Date of filing: 20.09.2016
(51) Int. Cl.: A01D 34/135, A01D 34/14, A01D 34/30, A01D 34/404, A01D 34/408

(54) **CUTTER BAR HAVING A SCISSOR WITH DOUBLE RECIPROCATING MOTION**
SCHNEIDLEISTE MIT EINER SCHERE MIT DUALER HIN- UND HERBEWEGUNG
BARRE DE COUPE AYANT DES CISEAUX PRÉSENTANT UN MOUVEMENT DE VA-ET-VIENT

(30) Priority: 21.09.2015 IT UB20153775
(43) Date of publication of application: 22.03.2017
(73) Proprietor: BCS S.p.A., 20123 Milano (MI) (IT)
(72) Inventor: OMODEO VANONE, Fabrizio, 27036 Mortara (PV) (IT)
(74) Representative: Branca, Emanuela

(56) References cited:
- DE-A1-102011 016 618
- DE-U1- 29 615 068

## Description

The present invention refers to a cutter bar applicable to motor mowers or to movers of any type.

In particular, the present invention refers to a cutter bar configured to make a scissor cut with double reciprocating motion of the lower and upper blades.

As can be worked out, the type of mower bars with reciprocating motion, also called *"sickle bars",* presupposes the presence of two elements, at least one of which is a cutter, which move with reciprocating motion with respect to one another.

Substantially, the cutting can be obtained in two different ways, i.e.:
- by contrast, where a blade is provided that cooperates with a comb element equipped with teeth, tongues or other types of contrast elements;
- by scissor cut, i.e. "mulching", where the two cutting elements, blade and comb, are configured with respect to each other to make a true scissor coupling. The bars configured to carry out a contrast cut with the aforementioned toothed comb cut the grass by "shearing" effect, or indeed by contrast, i.e. the blade of grass rests on one side on the edge of the tooth and is cut by the blade.

With this way of cutting it is not necessary for there to be pressure between blade and underlying tooth and therefore such bars require less accurate adjustment of the cutting elements.

On the other hand, these bars configured to carry out a contrast cut do not always ensure good reliability. Indeed, with this type of bars, for example in conditions of already cut grass, flattened or tangled due to rain and wind, the teeth of the comb find it difficult to penetrate into the grass to be cut, which instead is pushed forwards accumulating on the tip of the teeth of the comb and clogging up the comb itself until the operator is forced to stop the machine for the necessary cleaning of the comb.

The mowing bars configured to make a scissor cut comprise two components, at least one of which moves with relative reciprocating motion with respect to the other, clamping the grass stem between the lower one and the upper one.

This type of bar makes it possible to obtain a clean and precise cut in all conditions, including very fine or flattened grass, and is insensitive to already cut grass, but requires accurate adjustment.

With this way of cutting, the pressure between the two blades is essential, having to zero the clearance between the cutters. Indeed, in the presence of clearance, since the tongue with contrast function is not present, the grass stem could bend and slip between the cutters with a consequent poor cutting quality.

A further differentiation between existing bars is relative to whether the lower comb in the scissor bars or the toothed comb in the contrast bars are fixed or also mobile with reciprocating motion like the upper blade.

Therefore, the bars can also be defined as single or double movement.

The big advantage of double movement bars is that it is possible to size the bar so as to achieve dynamic balancing, with consequent elimination of the vibrations caused on the machine and on the operator. Summarizing, therefore, the prior art can be divided into the following four types:
- contrast cutting bars with single movement;
- scissor cutting bars with single movement;
- contrast cutting bars with double movement;
- scissor cutting bars with double movement.

An example of a bar configured to make a contrast cut with double movement is described in patent application no. MI2002A000911 to the same Applicant as the present patent application.

Inside the fourth type indicated above, that includes also the bar object of the present invention, it is common practice to make upper blades and lower combs of equal profile or in general of equal strength and masses, in such a way obtaining a bar that cuts thanks to the opposite motion of two blades.

Indeed, it is much simpler from the constructive point of view to make a control group that imparts two opposite movements of equal magnitude to both of the mobile elements.

Dynamic equilibrium is only reached, however, with the balancing of the products between the masses and the strokes of the two moving elements.

Consequence of this is, as stated earlier, that both moving elements, i.e. the upper and lower blades, may not have too different masses.

Otherwise the dynamic balancing is compromised.

Unfortunately, such common practice intrinsically means that the lower blade closest to the ground cannot in general be as strong as would be wished, for example to better withstand impacts, otherwise it would also be necessary to strengthen or increase the mass of the upper blade.

However, scissor cutting bars with double movement in which the lower blade is thicker than the upper blade are also known, for example from DE-U1-29615068. Moreover, another drawback of known scissor cutting bars with double movement concerns the coupling currently used to fix the small blades to the blade strip that supports and guides them. Indeed, currently, for reasons of bulk due to the need to obtain the two planes of contact of the blades, as constraint for the small blades rivets with a frusto-conical head are used that, inevitably, under the action of the forces due to cutting, act as wedges, rapidly losing the attachment cohesion between the small blades and the relative supporting strip.

Once clearances have been established, during operation the integrity of the mechanism is quickly compromised. Starting from such a prior art, the purpose of the present invention is to make a cutter bar configured to make a scissor cut with double reciprocating motion of the upper and lower cutting components that, by improving known ones, at the same time is particularly efficient.

In particular, the purpose of the present invention is to make a cutter bar configured to make a scissor cut with double reciprocating motion of the upper and lower cutting components, in which:
- the stronger lower component, similar in strength to the comb of single movement bars, offers greater resistance to impacts, for example with stones or other material that can be encountered during cutting;
- the coupling between the small blades and the relative supporting strip is such as to avoid the occurrence of clearances;
- the discharge of plant material is promoted, preventing accumulations between the blades.

In general, these purposes are accomplished thanks to the fact that the lower small blades are real teeth and have greater mass, about double with respect to those of the upper blade, and have a much greater thickness. From a dynamic point of view, the balancing is maintained thanks to a control group that imparts movements of unequal excursion to the blades.

Such control must be carried out, for example, by a control group as described in patent application MI2002A001003 again to the Applicant.

In this way, the stronger lower small blades are advantageously insensitive to impacts with respect to known embodiments.

Such an increased thickness allows a further advantage to be obtained.

Indeed, thanks to such greater thickness of the comb, it is possible to obtain on the plane of the lower teeth a seat, for example shaped like a concave groove, in which the projecting head of the rivets that fix the upper small blades can be housed.

In this way, the part of nail that fixes the upper small blades is cylindrical, no longer conical as currently is the case, with a consequent much stronger nailing, insensitive to impacts and easier to maintain. Such a seat or concave groove operates at a central opening obtained on the small blades of the blade having a shape such as to have a uniform influence on flexural strength.

This opening decreases the mass of the blade, making it possible to size a comb that is consequently lighter, having lower inertia forces.

Another advantage of this opening is to allow the discharge of plant material, preventing accumulations between the blade and the comb.

This retaining of material is very harmful to cutting quality, because it wears down the moving parts and increases mechanical stresses.

The characteristics and advantages of a cutter bar configured to make a scissor cut with double reciprocating motion of the upper and lower cutting components according to the present invention will become clearer from the following description, given as an example and not for limiting purposes, referring to the attached schematic drawings, in which:

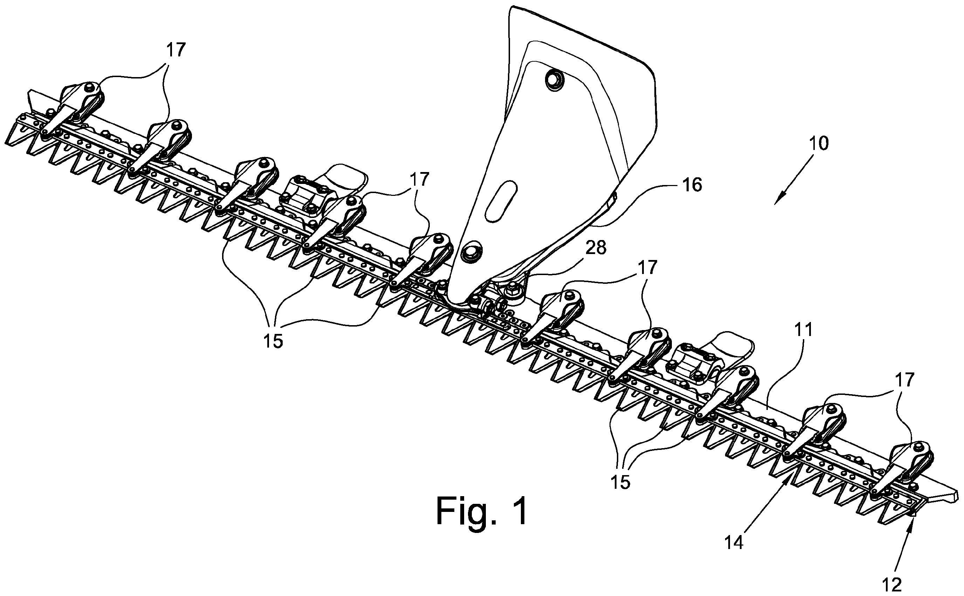

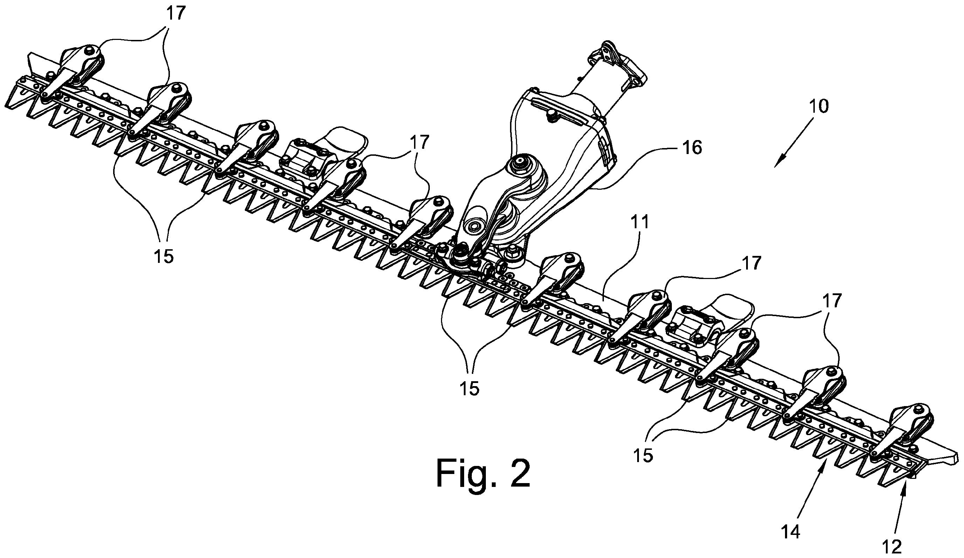

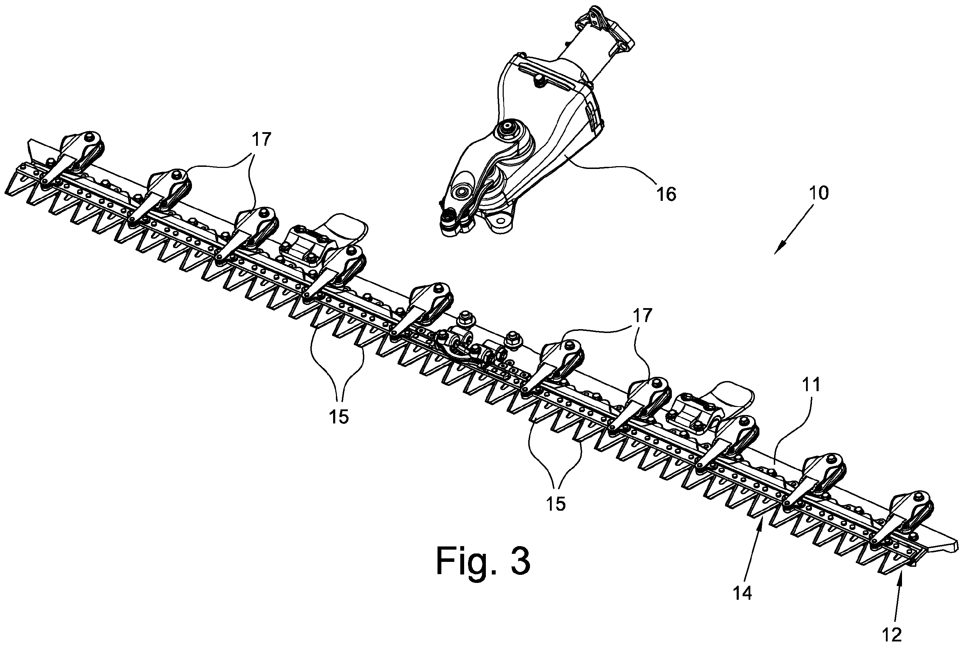

- figures 1-3 are perspective views of the bar of the present invention respectively with the control group of the motion mounted and covered by a casing, with the control group of the motion mounted and visible, and with the control group of the motion released from the bar;

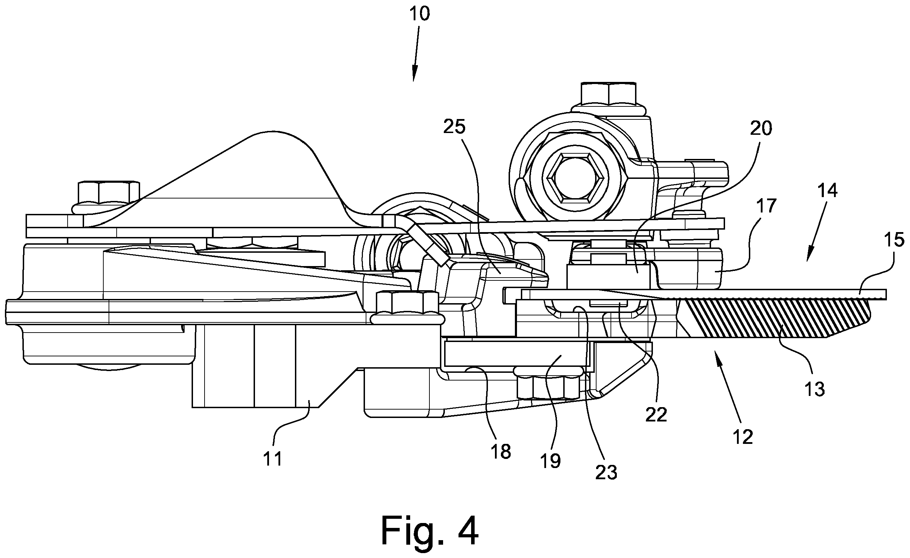

- figure 4 is a side view of the bar of the present invention;

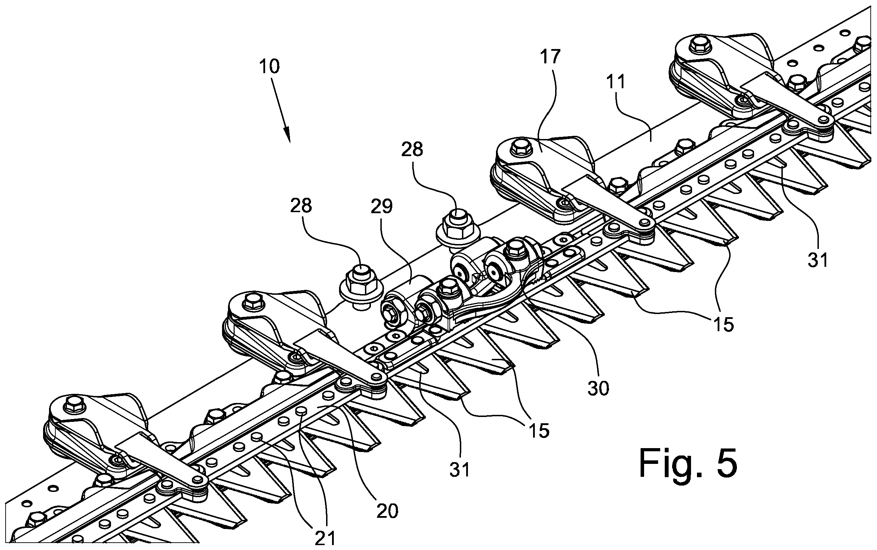

- figure 5 is an enlarged view of the bar of figure 3;

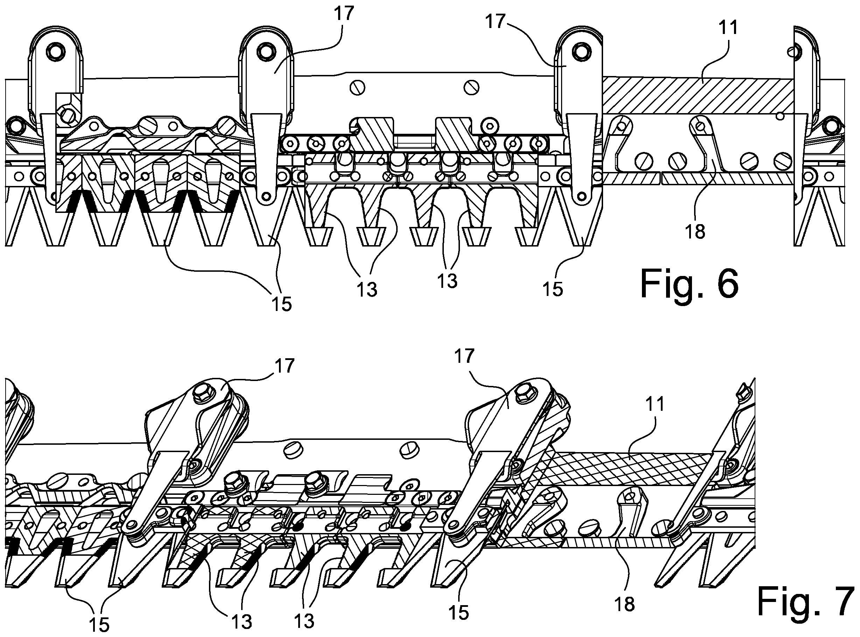

- figures 6 and 7 are partially sectioned views of the bar of figure 5;

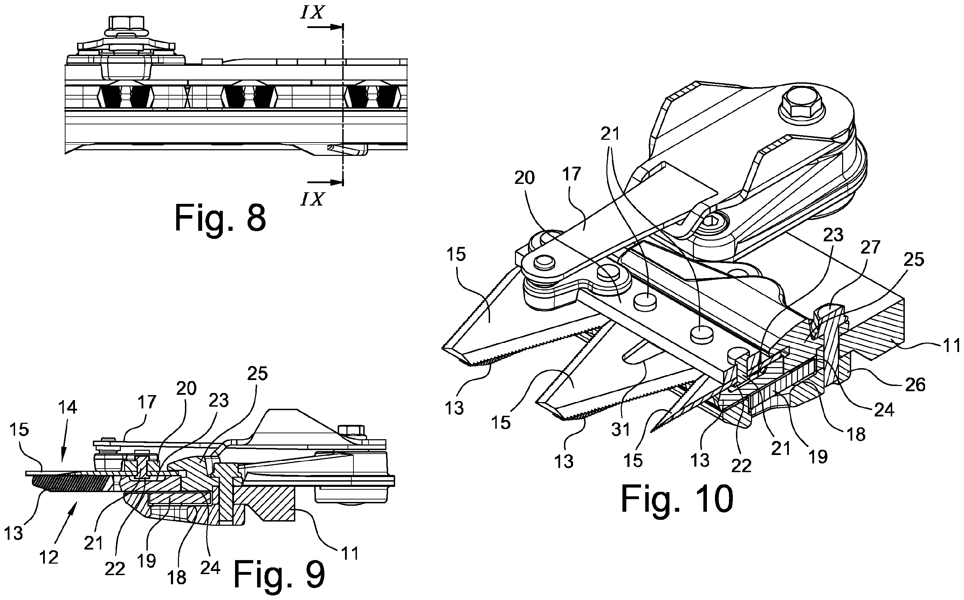

- figure 8 is a detail of the front view of the bar of figure 5;
- figures 9 and 10 are section views of the bar of figure 8 along the section line A-A;

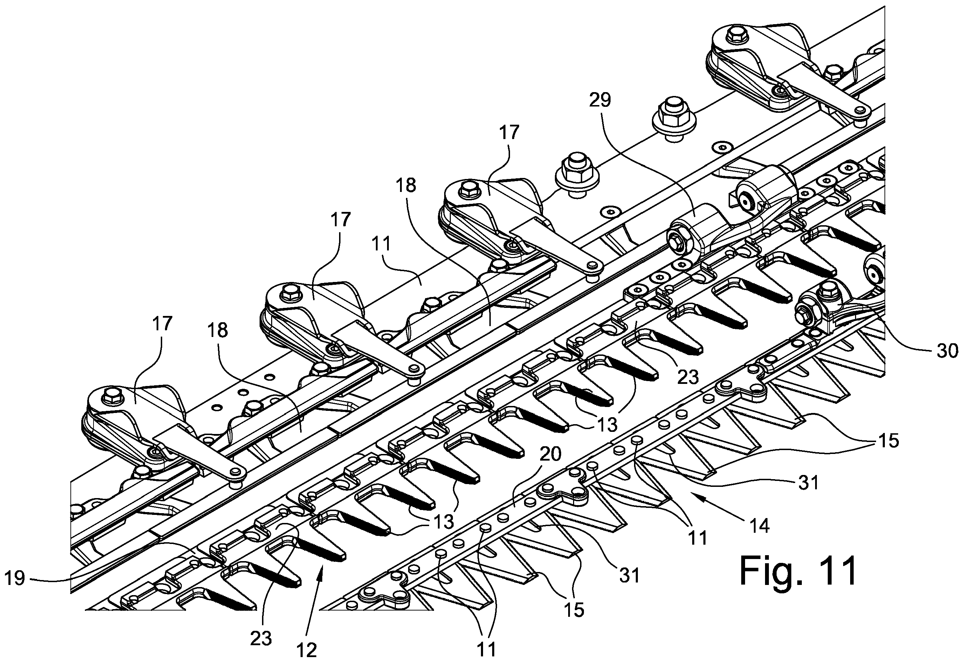

- figure 11 is an exploded view of the bar of figure 5. With reference to the figures, a cutter bar configured to make a scissor cut with double reciprocating motion of the upper blade and of the lower comb according to the present invention is shown with 10.

Such a cutter bar is of the type applicable to motor mowers or mowers and comprises:
- a supporting bar 11;
- a lower blade 12 sliding along the axis of the larger dimension of the supporting bar 11 comprising a plurality of lower small blades or teeth 13;
- an upper blade 14 sliding along the axis of the larger dimension of the supporting bar 11 arranged superimposed on the lower blade and comprising a plurality of upper small blades 15;
- a control group 16, of the known type, configured to impart an opposite reciprocating motion of unequal excursion to the blades 12, 14;
- bladeholder devices 17 acting on the upper surface of the upper blade 14 to ensure the scissor cutting effect between the blades 12, 14.

The control group 16 is fixed with bolts 28 to the bar 10 and interacts with the blades 12, 14 through relative heads 29, 30.

Starting from such a configuration, according to the invention the lower small blades or teeth 13 have a greater thickness or mass than the upper small blades 15.

In particular, the lower small blades 13 have at least double the thickness of the upper small blades 15 and/or the lower blade or comb 12 has about double the mass of the upper blade 14.

The supporting bar 11 is associated, for example through bolts 27, with front shaped elements 26 that make a sliding track guide 18 for the lower blade 12.

In particular, the lower blade or comb 12 comprises a lower supporting strip 19 housed in the track 18, to which the lower small blades 13 are constrained, preferably with interposition of anti wear pads 24.

The upper blade 14 comprises an upper supporting strip 20, to which the upper small blades 15 are constrained through rivets 21.

The lower cylinder head 22 of the rivets 21 is housed in lowered seats 23 obtained on the upper face of the lower small blades or teeth 13.

The upper small blades 15 comprise a through-slot 31 at the lowered seats 23 to allow the discharge of plant material, preventing accumulations between the lower blade 12 and the upper blade 14 that constitute the mobile elements.

Finally, the cutter bar 10 comprises a restraint 25 for connecting the blades 12, 14 and the bar 11 and for countering transverse thrusts.

It has thus been seen that a cutter bar configured to make a scissor cut with double reciprocating motion of the upper and lower cutting components according to the present invention achieves the purposes outlined earlier.

Indeed, the bar described and claimed here offers:
- greater resistance to impacts at the lower blade, now more correctly defined as comb, for example with stones or other material that can be encountered during cutting;
- it avoids the occurrence of clearances between the small cutting blades and the relative supporting strip; and
- it promotes the discharge of plant material, preventing accumulations between the blades.

The cutter bar configured to make a scissor cut with double reciprocating motion of the upper blades and of the lower comb of the present invention thus conceived can undergo numerous modifications and variants, all of which are covered by the same inventive concept.

## Claims

1. Cutter bar (10) of the type applicable to motor mowers or mowers comprising:
- a supporting bar (11);
- a lower blade or comb (12) sliding along the major axis with respect to said supporting bar (11) comprising a plurality of lower small blades or teeth (13) ;
- an upper blade (14) sliding along the major axis with respect to said supporting bar (11) arranged superimposed on said lower blade and comprising a plurality of upper small blades (15);
- a control group (16) configured for imparting an opposite reciprocating motion to said blades (12, 14);
- bladeholder devices (17) acting on the upper surface of said upper blade (14);
wherein said lower small blades or teeth (13) have a thickness or mass greater than said upper small blades (15) and wherein said upper blade (14) comprises an upper supporting strip (20), to which said upper small blades (15) are constrained by means of rivets (21), **characterized in that** the lower cylinder head (22) of said rivets (21) are housed in lowered seats (23) obtained on the upper face of said lower small blades or teeth (13).

2. Cutter bar (10) according to claim 1, **characterized in that** said lower small blades or teeth (13) have a thickness at least double with respect to said upper small blades (15).

3. Cutter bar (10) according to any preceding claims, **characterized in that** said lower blade or comb (12) has a mass about double with respect to said upper blade (14).

4. Cutter bar (10) according to any one of the previous claims, **characterized in that** said upper small blades (15) comprise a through-slot (31) at said lowered seats (23) to allow the discharge of plant material, preventing accumulations between said lower blade (12) and said upper blade (14).

5. Cutter bar (10) according to any preceding claims, **characterized in that** said supporting bar (11) comprises a track guide along the major sliding axis (18) for said lower blade or comb (12).

6. Cutter bar (10) according to claim 5, **characterized in that** said lower blade or comb (12) comprises a lower supporting strip (19) housed in said track (18), to which said lower small blades (13) are constrained.

7. Cutter bar (10) according to claim 6, **characterized in that** it comprises anti wear pads (24) between said lower small blades or teeth (13) and said lower supporting strip (19).

8. Cutter bar (10) according to any preceding claims, **characterized in that** it comprises a restraint (25) for connecting said lower blade (12) and said upper blade (14) with said bar (11) and for countering transverse thrusts.

## Patentansprüche

1. Schneidleiste (10) des Typs, der mit Motormähern oder Mähern verbindbar ist, umfassend:
- eine Trägerleiste (11);
- ein längs der Hauptachse in Bezug auf die Trägerleiste (11) gleitendes, unteres Messer oder Kamm (12), umfassend eine Mehrzahl von kleinen, unteren Messern oder Zähnen (13);
- ein längs der Hauptachse in Bezug auf die Trägerleiste (11) gleitendes, oberes Messer (14), das über dem unteren Messer überlappend angeordnet ist und eine Mehrzahl von kleinen, oberen Messern (15) umfasst;
- eine Steuergruppe (16), die ausgebildet ist, um den Messern (12, 14) eine gegenläufige Hin- und Herbewegung aufzuerlegen;
- Messerhaltervorrichtungen (17), die auf die obere Oberfläche des oberen Messers (14) wirken;
wobei die kleinen, unteren Messer oder Zähne (13) eine Dicke oder Masse aufweisen, die größer als die der oberen, kleinen Messer (15) ist und wobei das obere Messer (14) ein oberes Stützband (20) umfasst, an dem die oberen, kleinen Messer (15) mittels Nieten (21) verbunden sind, **dadurch gekennzeichnet, dass** die unteren Zylinderköpfe (22) der Nieten (21) in abgesenkten Sitzen (23) untergebracht sind, die auf der Oberseite der unteren, kleinen Messer oder Zähne (13) herausgearbeitet sind.

2. Schneidleiste (10) nach Anspruch 1, **dadurch gekennzeichnet, dass** die unteren, kleinen Messer oder Zähne (13) wenigstens doppelt so dick wie die oberen, kleinen Messer (15) sind.

3. Schneidleiste (10) nach einem der vorstehenden Ansprüche, **dadurch gekennzeichnet, dass** das untere Messer oder Kamm (12) ungefähr die doppelte Masse in Bezug auf das obere Messer (14) aufweist.

4. Schneidleiste (10) nach einem der vorstehenden Ansprüche, **dadurch gekennzeichnet, dass** die oberen, kleinen Messer (15) einen durchgehenden Schlitz (31) an den abgesenkten Sitzen (23) aufweisen, um den Auswurf des Pflanzenmaterials zu erlauben und dadurch Ansammlungen zwischen dem unteren Messer (12) und dem oberen Messer (14) zu vermeiden.

5. Schneidleiste (10) nach einem der vorstehenden Ansprüche, **dadurch gekennzeichnet, dass** die Stützleiste (11) eine Führungsbahn längs der Hauptgleitachse (18) für das untere Messer oder Kamm (12) aufweist.

6. Schneidleiste (10) nach Anspruch 5, **dadurch gekennzeichnet, dass** das untere Messer oder Kamm (12) ein unteres Stützband (19) umfasst, das in der Bahn (18) untergebracht ist, mit der die unteren, kleinen Messer (13) verbunden sind.

7. Schneidleiste (10) nach Anspruch 6, **dadurch gekennzeichnet, dass** sie Verschleißschutzflächen (24) zwischen den unteren, kleinen Messern oder Zähnen (13) und dem unteren Stützband (19) umfasst.

8. Schneidleiste (10) nach einem der vorstehenden Ansprüche, **dadurch gekennzeichnet, dass** sie eine Zwangsführung (25) umfasst, um das untere Messer (12) und das obere Messer (14) mit der Leiste (11) zu verbinden und Querschüben entgegenzuwirken.

## Revendications

1. Barre de coupe (10) du type applicable à des tondeuses à moteur ou des tondeuses, comprenant :
- une barre de support (11) ;
- une lame inférieure ou peigne (12) coulissant suivant l'axe principal par rapport à ladite barre de support (11) comprenant une pluralité de petites lames ou dents inférieures (13) ;
- une lame supérieure (14) coulissant suivant l'axe principal par rapport à ladite barre de support (11), agencée superposée sur ladite lame inférieure et comprenant une pluralité de petites lames supérieures (15) ;
- un groupe de commande (16) configuré pour communiquer un mouvement de va-et-vient opposé auxdites lames (12, 14) ;
- des dispositifs porte-lame (17) agissant sur la surface supérieure de ladite lame supérieure (14) ;
dans laquelle lesdites petites lames ou dents inférieures (13) ont une épaisseur ou masse supérieure par rapport auxdites petites lames supérieures (15) et dans laquelle ladite lame supérieure (14) comprend une bande de support supérieure (20), à laquelle lesdites petites lames supérieures (15) sont fixées au moyen de rivets (21), **caractérisée en ce que** la tête cylindrique inférieure (22) desdits rivets (21) sont logées dans des sièges abaissés (23) obtenus sur la face supérieure desdites petites lames ou dents inférieures (13).

2. Barre de coupe (10) selon la revendication 1, **caractérisée en ce que** lesdites petites lames ou dents inférieures (13) ont une épaisseur au moins double par rapport auxdites petites lames supérieures (15).

3. Barre de coupe (10) selon n'importe quelles revendications précédentes, **caractérisée en ce que** ladite lame inférieure ou peigne (12) a une masse environ double par rapport à ladite lame supérieure (14).

4. Barre de coupe (10) selon l'une quelconque des revendications précédentes, **caractérisée en ce que** lesdites petites lames supérieures (15) comprennent une fente passante (31) au niveau desdits sièges abaissés (23) pour permettre la décharge de matières végétales, en empêchant des accumulations entre ladite lame inférieure (12) et ladite lame supérieure (14).

5. Barre de coupe (10) selon n'importe quelles revendications précédentes, **caractérisée en ce que** ladite barre de support (11) comprend une voie de guidage suivant l'axe de coulissement principal (18) pour ladite lame inférieure ou peigne (12).

6. Barre de coupe (10) selon la revendication 5, **caractérisée en ce que** ladite lame inférieure ou peigne (12) comprend une bande de support inférieure (19) logée dans ladite voie (18), à laquelle lesdites petites lames inférieures (13) sont fixées.

7. Barre de coupe (10) selon la revendication 6, **caractérisée en ce qu'**elle comprend des coussinets antiusure (24) entre lesdites petites lames ou dents inférieures (13) et ladite bande de support inférieure (19).

8. Barre de coupe (10) selon n'importe quelles revendications précédentes, **caractérisée en ce qu'**elle comprend une restriction (25) pour connecter ladite lame inférieure (12) et ladite lame supérieure (14) à ladite barre (11) et pour compenser des poussées transversales.
